(19) Europäisches Patentamt
European Patent Office
Office européen des brevets

(11) Publication number: 0 335 416 A2

(12) # EUROPEAN PATENT APPLICATION

(21) Application number: 89105707.7

(22) Date of filing: 31.03.89

(51) Int. Cl.4: C08G 63/62

(30) Priority: 01.04.88 JP 78135/88
30.06.88 JP 161010/88

(43) Date of publication of application: 04.10.89 Bulletin 89/40

(84) Designated Contracting States: DE FR GB

(71) Applicant: HODOGAYA CHEMICAL CO., LTD.
4-2, Toranomon 1-chome Minato-ku
Tokyo(JP)

(72) Inventor: Jinbo, Susumu Hodogaya Chemical Co., Ltd.
Chuo Kenkyusho Tsurumi Bunshitsu 7-43 Daikoku
Tsurumi-ku Yokohama-shi
Kanagawa-ken(JP)
Inventor: Shimada, Shigeru Hodogaya Chemical Co., Ltd.
Chuo Kenkyusho Tsurumi Bunshitsu 7-43 Daikoku
Tsurumi-ku Yokohama-shi
Kanagawa-ken(JP)
Inventor: Kataoka, Hiroaki Hodogaya Chemical Co., Ltd.
Chuo Kenkyusho Tsurumi Bunshitsu 7-43 Daikoku
Tsurumi-ku Yokohama-shi
Kanagawa-ken(JP)
Inventor: Tomioka, Itaru Hodogaya Chemical Co., Ltd.
Chuo Kenkyusho Tsurumi Bunshitsu 7-43 Daikoku
Tsurumi-ku Yokohama-shi
Kanagawa-ken(JP)

(74) Representative: Wächtershäuser, Günter, Dr.
Tal 29
D-8000 München 2(DE)

(54) # Modified polyoxytetramethylene glycol and processes for its production.

(57) A modified polyoxytetramethylene glycol having a main chain with a repeating structure comprising a polyoxytetramethylene group of the formula $\{O(CH_2)_4\}_n$ wherein n is from 3 to 28, and a dioxycarbonyl group of the formula

$$-O\overset{\overset{O}{\|}}{C}O-$$

, wherein the oxytetramethylene group $-O(CH_2)_4-$ constitutes from 75.5 to 99.3 mol% and the dioxycarbonyl group constitutes from 24.5 to 0.7 mol%.

EP 0 335 416 A2

# MODIFIED POLYOXYTETRAMETHYLENE GLYCOL AND PROCESSES FOR ITS PRODUCTION

The present invention relates to a modified polyoxytetramethylene glycol having a low melting point and excellent heat resistance and processes for its production.

A polyether polyol is commonly used as a soft segment component for polyurethane resins. Particularly, polyurethane resins using polyoxytetramethylene glycol (hereinafter referred to simply as PTMEG) have attracted an attention in that they are excellent in the elastic properties, low temperature properties, resistance against hydrolysis, resistance against bacteria, etc. PTMEG is a material useful also as a soft segment component for polyester or polyamide resins.

However, PTMEG tends to have a high melting point as its molecular weight increases. When the number average molecular weight is an industrially useful range of from 1,000 to 4,000, its melting point is within a range of from 14 to 29 °C, and it is wax-like solid at room temperature, whereby not only handling or operation efficiency is poor, but also a serious problem is created in the fields of coating materials, coatings, elastomers or binders where room temperature curing is required.

As an attempt to lower the melting point of PTMEG, a tetrahydrofuran/alkyleneoxide copolyetherpolyol has been reported in Journal of Polymer Science, 58, 857-863 (1962) or U.S. Patent 4,127,513. However, the tetrahydrofuran/propyleneoxide copolyetherpolyol has a drawback that it is poor in the reactivity with an isocyanate group and the heat resistance is low, since the terminal hydroxyl group is secondary and it has an oxypropylene group in the structure. Further, with the tetrahydrofuran/ethyleneoxide copolyetherpolyol, the water resistance tends to be reduced by the oxyethylene group to an unacceptable extent. Further, diol compounds containig a dioxycarbonyl group are disclosed in U.S. Patent 3,544,524 and Japanese Unexamined Patent Publication No. 56124/1980. U.S. Patent 3,544,524 is concerned with a polyurethane composition comprising a polycarbonate diol obtained by an ester exchange reaction of 1,6-hexanediol with a diallyl carbonate, an isocyanate compound and a chain extender. Japanese Unexamined Patent Publication No. 56124/1980 is concerned with a process for producing a polycarbonate diol by an ester exchange reaction of an alkylene carbonate of a 5- to 7-membered ring with a dihydroxy compound, wherein polyoxyalkylene glycol is disclosed as the dihydroxy compound.

Another problem with PTMEG is heat resistance. A polyurethane resin using a polyether polyol such as PTMEG is usually poor in the heat resistance and oxidation resistance such as light resistance, whereby the progress in its application in the market is rather restricted. It is thereby strongly desired to improve such properties.

It is an object of the present invention to solve such problems inherent to PTMEG and conventional techniques and to provide a modified polyoxytetramethylene glycol having a low melting point, high reactivity with isocyanate and excellent heat resistance, and a process for its preparation.

As a result of extensive researches with the above object, the present inventors have found that a modified polyoxytetramethylene glycol having a polyoxytetramethylene group linked by a dioxycarbonyl group has a melting point lower than equivalent PTMEG and excellent heat resistance. The present invention has been accomplished on the basis of this discovery.

The present invention provides a modified polyoxytetramethylene glycol having a main chain with a repeating structure comprising a polyoxytetramethylene group of the formula $\{O(CH_2)_4\}_n$ wherein n is from 3 to 28, and a dioxycarbonyl group of the formula

$-O\overset{O}{\overset{\|}{C}}O-$, wherein the oxytetramethylene group $-O(CH_2)_4-$constitutes from 75.5 to 99.3 mol% and the dioxycarbonyl group constitutes from 24.5 to 0.7 mol%.

The present invention also provides a process for producing the modified polyoxytetramethylene glycol, which comprises subjecting a polyoxytetramethylene glycol of the formula $H\{O(CH_2)_4\}_nOH$ wherein n is as defined above, to an ester exchange reaction with a carbonate of the formula

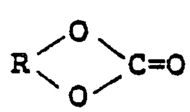

wherein R is a bivalent aliphatic saturated $C_2$-$C_6$ hydrocarbon group, or

$R'O\overset{O}{\overset{\|}{C}}OR''$ wherein each of $R'$ and $R''$ which may be the same or different is a monovalent aliphatic $C_1$-$C_6$ hydrocarbon group or an aryl group, in a molar ratio of the polyoxytetramethylene glycol/the carbonate of

from 0.1 to 1.0.

The present invention provides another process for producing the modified polyoxytetramethylene glycol, which comprises reacting a polyoxytetramethylene glycol of the formula $H\{O(CH_2)_4\}_nOH$ wherein n is as defined above, with phosgene in the presence of an inert solvent, wherein the polyoxytetramethylene glycol and phosgene are mixed in a molar ratio of from 1.08 to 2.0, and then an organic base is added to conduct the reaction.

The present invention provides still another process for producing the modified polyoxytetramethylene glycol, which comprises reacting a polyoxytetramethylene glycol of the formula $H\{O(CH_2)_4\}_nOH$ wherein n is as defined above, with trichloromethyl chloroformate in the presence of an inert solvent, wherein from 0.001 to 5.0% by weight, relative to trichloromethyl chloroformate, of pyridine, a pyridine derivative, quinoline, tetramethylurea, hexamethylphosphoric acid triamide and/or an amine of the formula $R_1R_2R_3N$ wherein $R_1$ is an alkyl group having from 1 to 12 carbon atoms, and each of $R_2$ and $R_3$ is an alkyl group having from 1 to 4 carbon atoms, provided that $R_1$, $R_2$ and $R_3$ may be the same or different, is preliminarily added to polyoxytetramethylene glycol, then the polyoxy tetramethylene glycol and trichloromethyl chloroformate are mixed in a molar ratio of from 2.16 to 4.0, and then an organic base is added to conduct the reaction.

Now, the present invention will be described in detail with reference to the preferred embodiments.

The main chain of the modified polyoxytetramethylene glycol of the present invention comprises from 75.5 to 99.3 mol% of the oxytetramethylene group and from 24.5 to 0.7 mol% of the dioxycarbonyl group. If the dioxycarbonyl group is more than 99.3 mol%, the melt viscosity tends to increase thus leading to a difficulty in handling or operation efficiency, although the melting point will be reduced and the heat resistance will be improved as compared with PTMEG having an equivalent molecular weight. On the other hand, if the dioxycarbonyl group is less than 0.7 mol%, the effects of the present invention tend to be inadequate.

There is no particular restriction as to the molecular weight of the modified polyoxytetramethylene glycol of the present invention. However, the molecular weight is preferably from 1,000 to 5,000.

The modified polyoxytetramethylene glycol having the structure of the present invention can readily be prepared by charging PTMEG having a molecular weight within a specific range and various carbonates in a specific range, and subjecting them to an ester exchange reaction.

PTMEG used in the present invention is the one produced by the cationic ring opening polymerization of tetrahydrofuran and represented by the formula $H\{O(CH_2)_4\}_nOH$, wherein n is from 3 to 28, preferably from 4 to 20. If n is 29 or more, the dioxycarbonyl group tends to be 0.6 mol% or less, whereby the effects of the present invention will be less. Further, if n is 2 or less, excellent properties specific to the polyoxytetramethylene group tend to be lost.

The carbonate compound used in the present invention is a carbonate of the formula

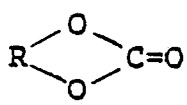 or 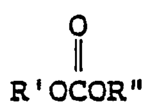

wherein R, R′ and R″ are as defined above. Specific examples include cyclic carbonates such as ethylene carbonate, 1,2-propylene carbonate, trimethylene carbonate, 1,2-butylene carbonate, 1,3-butylene carbonate, tetramethylene carbonate, 1,2-pentylene carbonate, 1,3-pentylene carbonate, 1,4-pentylene carbonate, 2,3-pentylene carbonate, 2,4-pentylene carbonate and hexamethylene carbonate; dialkyl carbonates such as dimethyl carbonate, diethyl carbonate, dipropyl carbonate, dibutyl carbonate and dipentyl carbonate; and diaryl carbonates such as diphenyl carbonate, ditolyl carbonate and dinaphthylene carbonate. These carbonates may be used alone or in combination as a mixture of two or more.

For the production of the modified polyoxytetramethylene glycol of the present invention, the charging ratio (molar ratio) of PTMEG/carbonate for the reaction is within a range of from 0.1 to 2.0, preferably from 0.8 to 0.2, and will be determined depending upon the desired requirements such as the molecular weight or the properties.

The ester exchange reaction for the production of the modified polyoxytetramethylene glycol of the present invention can be conducted in the absence of a catalyst. However, in order to facilitate the reaction, it is preferred to use a known ester exchange reaction catalyst. Specific examples include titanate compounds such as tetramethyl titanate, tetraethyl titanate, tetrapropyl titanate and tetrabutyl titanate; and lithium halide compounds such as lithium chloride, lithium bromide and lithium iodide. Other useful catalysts include metals such as lithium, sodium, potassium, rubidium, magnesium, calcium, strontium, barium, zinc,

aluminum, titanium, cobalt, germanium, tin, lead and antimony and their alkoxides; alkali and alkaline earth metal carbonates; zinc borate; zinc oxide; lead silicate; litharge; lead carbonate; antimony trioxide; germanium dioxide; and aluminum isopropoxide.

The amount of the catalyst is usually from 0.001 to 0.5 mol%, preferably from 0.05 to 0.3 mol%, relative to the molar amount of charged PTMEG.

There is no particular restriction as to the temperature or the pressure for the ester exchange reaction of the present invention. However, the reaction is conducted usually at a temperature of from 120 to 250 °C under a pressure of from 150 to 1 mmHg for from 5 to 30 hours while distilling off a hydroxy compound produced as by-product. It is preferred that at the initial stage of the reaction, the reaction is conducted at a relatively low temperature and low degree of pressure reduction, and as the reaction progresses, the temperature and the degree for the pressure reduction are increased while removing unreacted starting materials and the by-product hydroxy compound. To facilitate the distillation of the by-product hydroxy compound and at the same time to prevent colorization of the product, it is preferred to use an inert gas stream such as nitrogen.

According to another process of the present invention, the modified polyoxytetramethylene glycol having the structure of the present invention, can readily be prepared by reacting PTMEG having a molecular weight of a specific range with phosgene or with trichloromethyl chloroformate with a specific range of the charging rate and method, or with incorporation of an additive.

PTMEG useful for this process is the same as described with respect to the first process.

The organic base useful for this process includes pyridine, 2-methylpyridine, 3-methylpyridine, 4-methylpyridine, 5-methylpyridine, 6-methylpyridine, triethylamine, tri-n-propylamine and tri-n-butylamine. These organic bases may be used alone or in combination as a mixture. However, it is preferred to use them alone when the recovery is taken into accounts. Such an organic base is used in an amount of from 2.0 to 2.5 mols, preferably from 2.05 to 2.30 mols, per mol of phosgene.

As the additive to be preliminarily added to the polyoxytetramethylene glycol in the process of the present invention, for example, pyridine, 2-methylpyridine, 2,6-dichloropyridine, quinoline, tetramethylurea, hexamethyl phosphoric acid triamide, triethylamine, tri-n-butylamine or n-dodecyldimethylamine is suitably employed. The additive is used in an amount of at least 10 ppm, preferably from 0.1 to 3.0% by weight, relative to trichloromethyl chloroformate (hereinafter referred to simply as TCF).

There is no particular restriction as to the temperature for the addition. However, it is usually from 0 to 40 °C.

To conduct this process, a suitable inert solvent such as n-hexane, cyclohexane, benzene, toluene or xylene may be employed. There is no particular restriction as to the amount of the solvent, and the solvent may be in any amount so long as the hydrochloric acid salt of the organic base precipitated by the reaction, can adequately be stirred.

The charging ratio of PTMEG/phosgene is from 1.08 to 2.0, preferably from 1.15 to 2.0, in molar ratio. The ratio of PTMEG/TCF is within a range of from 2.16 to 4.0, preferably from 2.30 to 4.0, in molar ratio. Such charging ratios are determined depending upon the desired requirements such as the molecular weight and the physical properties. The temperatuer for mixing phosgene or TCF to PTMEG is from -10 to 60 °C, preferably from 0 to 40 °C. Then, the temperature for adding the organic base is from -20 to 50 °C, preferably from -5 to 15 °C. After completion of the addition, the temperature is gradually raised to a level of from 30 to 50 °C to complete the reaction. The hydrochloric acid salt of an organic base formed as by-product, is removed by filtration or by dissolving it with an addition of water, followed by liquid separation. Then, the solvent is distilled off from the reaction solution to obtain the modified polyoxytetramethylene glycol of the present invention.

The modified polyoxytetramethylene glycol of the present invention thus obtained, may be used as it is. However, if necessary, it may be subjected to washing with water and dehydration to remove the catalyst and a small amount of unreacted materials prior to its use.

Now, the present invention will be described in further detail with reference to Examples. However, it should be understood that the present invention is by no means restricted to such specific Examples. In the Examples, "parts" means "parts by weight" unless otherwise specified.

## EXAMPLE 1

Into a 0.5 ℓ four-necked glass flask equipped with a thermometer, a stirrer and a packed distillation column, 250 parts (0.4 mol) of PTMEG (manufactured by Hodogaya Chemical Co., Ltd.) having an average molecular weight (hereinafter referred to simply as $\overline{M}$) of 625.4, 50 parts (0.56 mol) of ethylene carbonate

and 0.020 part ($4.72 \times 10^{-4}$ mol) of anhydrous lithium chloride were charged, and the mixture was gradually heated to a temperature of about 80°C under stirring and maintained at that temperature until lithium chloride was completely dissovled. It took about 30 minutes. Then, the temperature was raised under reduced pressure, and the reaction was conducted for a total of 15 hours by changing the internal pressure and the temperature stepwisely so that the mixture was reacted under 50 mmHg at 150°C for 3 hours, under 100 mmHg at 160°C for 3 hours, under 50 mmHg at 170°C for 3 hours, under 30 mmHg at 180°C for 3 hours and under 20 mmHg at 190°C for 3 hours, while distilling off ethylene glycol formed as by-product. The reaction product was cooled to room temperature, 200 parts of water was added thereto, and the remaining by-product ethylene glycol and unreacted ethylene carbonate were removed. The product was subjected to water-removing treatment to obtain 126.3 parts of desired modified polyoxytetramethylene glycol. The hydroxyl value of this modified product was measured in accordance with JIS K0070 and found to be 44.8 (mgKOH/g sample). This corresponds to a molecular weight of $\overline{M}$ = 2,505. The melting point was measured by a differential scanning calorimeter (manufactured by Rigaku Denki K.K.) and found to be 8.5°C. Further, the decomposition temperature was from 247 to 398°C. In the case of PTMEG, when the molecular weight is $\overline{M}$ = 2,500, it is wax-like solid at room temperature, and the decomposition temperature is from 235 to 327°C. Whereas, the modified product of the present invention was liquid at room temperature and was found to have improved heat resistance. Further, the viscosity at 25°C was 4,500 cps (B-type viscometer), and from the infrared spectroscopic analysis, absorption was observed at $\nu$OH = 3450 $cm^{-1}$ and $\nu$C = O = 1740 $cm^{-1}$. Further, the number average molcular weight ( $\overline{M}n$ calculated as standard polyethylene) was measured by a known method by using HLC made of Toyo Soda Manufacturing Co., Ltd. as gel permeation chromatography (hereinafter referred to simply as GPC), and found to be 2,675.

EXAMPLES 2 to 7

Various modified polyoxytetramethylene glycols of the present invention were prepared in the same manner as in Example 1 except that the amount of the starting material ethylene carbonate or the catalyst was varied. The results are shown in Table 1.

Table 1

| Example | Charge | | | Reaction condition | | | Results | | | | | $\bar{M}n$ | |
|---|---|---|---|---|---|---|---|---|---|---|---|---|---|
| | PTMG | Carbonate | Catalyst | Pressure mmHg | Temp. (°C) | Time (H) | Obtained amount (parts) | OH value KOH mg/g | $\bar{M}$ | Tm (°C) | Td (°C) | GPC analysis | η (cps/25) |
| 2 | $\bar{M}$=625.4<br>250 parts<br>0.40 mol | EC<br>100 parts<br>1.136 mol | LiCl<br>0.02 part<br>$4.8 \times 10^{-4}$ mol | 150-20 | 150-190 | 15 | 271.0 | 28.3 | 3965 | 8.5 | 247-404 | 4151 | 24000 |
| 3 | $\bar{M}$=625.4<br>250 parts<br>0.40 mol | EC<br>200 parts<br>2.271 mol | LiCl<br>0.02 part<br>$4.8 \times 10^{-4}$ mol | 150-20 | 150-190 | 15 | 300.8 | 16.8 | 6679 | 7.9 | 236-408 | 6923 | 220000 |
| 4 | $\bar{M}$=625.4<br>250 parts<br>0.40 mol | PC<br>232 parts<br>2.272 mol | TBOT<br>0.16 part<br>$4.7 \times 10^{-4}$ mol | 150-20 | 150-190 | 15 | 253.8 | 41.3 | 2717 | 8.5 | 247-399 | 2939 | 4900 |
| 5 | $\bar{M}$=349.1<br>125 parts<br>0.358 mol | EC<br>44.8parts<br>0.509 M | LiCl<br>0.018 part<br>$4.2 \times 10^{-4}$ mol | 150-20 | 150-190 | 15 | 113.3 | 150.0 | 748 | -10.1 | 247-405 | 934 | 580 |
| 6 | $\bar{M}$=349.1<br>125 parts<br>0.358 mol | EC<br>89.6parts | LiCl<br>0.018 part<br>$4.2 \times 10^{-4}$ mol | 150-20 | 150-190 | 15 | 116.9 | 99.2 | 1131 | -6.8 | 250-402 | 1200 | 1300 |
| 7 | $\bar{M}$=1000<br>125 parts<br>0.124 mol | EC<br>31.0 g<br>0.352 mol | LiCl<br>0.010 g<br>$2.4 \times 10^{-4}$ mol | 150-20 | 150-190 | 15 | 128.2 | 19.1 | 5874 | 17.5 | 238-428 | 6098 | 50000 |

*EC: Ethylene carbonate
PC: Propylene carbonate
TBOT: n-Butyl orthotitanate

Tm: Melting point
Td: Heat decomposition temperature (in air)

η: Viscosity (cps at 25°C)

EXAMPLES 8 to 9

Products were obtained in the same manner as in Example 1 except that the ester exchange reaction was conducted at room temperature. The conditions and the results are shown in Table 2. Further, the physical properties of PTMEG (manufactured by Hodogaya Chemical Co., Ltd.) are shown as Comparative Examples 1 and 2.

Table 2

| Example | Charge | | | Reaction condition | | | Results | | | | | $\bar{M}n$ | |
|---|---|---|---|---|---|---|---|---|---|---|---|---|---|
| | PTMG | Carbonate | Catalyst | Pressure mmHg | Temp. (°C) | Time (H) | Obtained amount (parts) | OH value KOH mg/g | $\bar{M}$ | Tm (°C) | Td (°C) | GPC analysis | η (cps/25) |
| 8 | $\bar{M}$=625.4 250 parts 0.40 mol | EC 50 parts 0.568 mol | LiCl 0.02 part $4.8 \times 10^{-4}$ mol | Atmospheric pressure | 160 | 15 | 247.4 | 112.5 | 997 | 6.1-11.5 | - | 1098 | 570 |
| 9 | $\bar{M}$=625.4 250 parts 0.40 mol | EC 100 parts 1.136 mol | LiCl 0.02 part $4.8 \times 10^{-4}$ mol | Atmospheric pressure | 180 | 10 | 258.2 | 97.0 | 1157 | 7.5-11.0 | - | 1316 | 764 |
| Comparative Example 1 | PTG 4000 | - | - | - | - | - | - | 28.2 | 3979 | 28.5 | 246-312 | 4180 | 12000 (40°C) |
| 2 | PTG 2000 | - | - | - | - | - | - | 57.7 | 1945 | 22-25 | 245-313 | 2152 | 960 (40°C) |

*EC: Ethylene carbonate Tm: Melting point η: Viscosity (cps at 25°C)
Td: Heat decomposition temperature (in air)

EXAMPLE 10

Into a 0.5 ℓ four-necked glass flask equipped with a thermometer, a stirrer, a cooling condenser and a phosgene supply tube, 37.6 parts (0.06 mol) of PTMEG (manufactured by Hodogaya Chemical Co., Ltd.) having an average molecular weight $\overline{M}$ of 625.4 and 100 parts of toluene were charged, and 4.06 parts (0.041 mol) of phosgene was introduced under stirring at from 5 to 30 °C. Then, the phosgene supply tube was replaced by a dropping funnel, and 7.54 parts (0.095 mol) of pyridine was dropwise added thereto at a temperature of from 0 to 10 °C over a period of 30 minutes. With the dropwise addition, white crystals of pyridine precipitated. The reaction mixture was gradually heated and stirred at 50 °C for one hour. The mixture was cooled to room temperature, and 200 parts of water was added thereto to dissolve the hydrochloric acid salt of tri-n-butylamine. The organic layer and the aqueous layer were separated. The organic layer was washed three times with 200 mℓ of a 10% hydrochloric acid aqueous solution, and then the solvent was distilled off to obtain 37.9 parts of the desired modified polyoxytetramethylene glycol as the residue. The hydroxyl value of this modified product was measured by JIS K-0070 and was found to be 48.2 (KOHmg/g sample). This corresponds to a molecular weight of $\overline{M}$ = 2328. The melting point was measured by a differential scanning calorimeter (manufactured by Rigaku Denki K.K.) and found to be 9.2 °C. Further, the decomposition temperature was from 249 to 405 °C. In the case of PTMEG, when the molecular weight is M = 2,000, it is wax-like solid at room temperature, and the decomposition temperature is from 234 to 328 °C. Whereas, the modified product of the present invention was liquid at room temperature and was found to have improved heat resistance. Further, the viscosity at 25 °C was 3,580 cps, and from the infrared spectroscopic analysis, absorption at $\nu$OH = 3,450 $cm^{-1}$ and $\nu$C = O = 1,740$cm^{-1}$, was observed. Furthermore, the number average molecular weight ( $\overline{M}n$ calculated as standard polyethylene) was measured by a known method by using HLC manufactured by Toyo Soda Manufacturing Co., Ltd. as GPC and found to be 2,410.

EXAMPLES 11 to 14

Various modified polyoxytetramethylene glycols of the present invention were prepared in the same manner as in Exampel 10 except that the molecular weight of the starting PTMEG or the type of the base was varied. The results are shown in Table 3.

COMPARATIVE EXAMPLE 3

A product was prepared in the same manner as in Example 10 under the same charing condition except that the reaction method was changed so that phosgene was introduced under the same condition as the dropwise addition of pyridine to the mixture system of PTMEG, pyridine and toluene. As a result, in the GPC analysis of the reaction mixture, a peak attributable to unreacted PTMEG was observed, and a pattern having a wide compositional distribution was indicated. Other results are shown in Table 3.

EXAMPLE 15

Into a 0.5 ℓ four-necked glass flask equipped with a thermometer, a stirrer, a cooling condenser and a dropping funnel, 37.6 parts (0.06 mol) of PTMEG (manufactured by Hodogaya Chemical Co., Ltd.) having $\overline{M}$ = 625.4 and 0.1 part of pyridine were added thereto. Then, 3.98 parts of TCF was added over a period of 10 minutes under stirring at from 0 to 10 °C. Then, 7.54 parts of pyridine was dropwise added over a period of 30 minutes, and the subsequent operation was conducted in the same manner as in Example 10. The results are shown in Table 3.

EXAMPLES 16 and 17

Various modified polyoxytetramethylene glycols of the present invention were prepared in the same

manner as in Example 15 except that the amount of TCF or the amount of pyridine was varied. The results are shown in Table 3.

COMPARATIVE EXAMPLE 4

A product was obtained in the same manner as in Comparative Example 3 except that TCF was dropwise added to a mixture of PTMEG, pyridine and toluene. As a result, in the GPC analysis of the reaction product, the peak of unreacted PTMEG was observed to show a wide pattern of the compositional distribution. Other results are shown in Table 4.

COMPARATIVE EXAMPLE 5

In Example 15, no additive was preliminarily added to PTMEG, and TCF was added. Thereafter, a similar operation was conducted. The results are shown in Table 4. Further, the physical properties of PTMEG (manufactured by Hodogaya Chemical Co., Ltd.) are shown in Comparative Examples 6 and 7.

Table 3

| Example | Charge | | | | | Reaction conditions | | | |
|---|---|---|---|---|---|---|---|---|---|
| | | | | | | Dropwise addition | | Post Reaction | |
| | PTMEG | Addition | Phosgene | Base | Solvent | Temp. (°C) | Time (min) | Temp. (°C) | Time (H) |
| Example 11 | $\bar{M}$=625.4 37.6 parts 0.060 mol | - | 5.00 parts 0.051 mol | Pyridine 87.2 parts 0.110 mol | Toluene 100 parts | ·5-15 | 25 | 50 | 1 |
| Example 12 | $\bar{M}$=625.4 1250.8 parts 2.00 mol | - | 132.0 parts 1.333 mol | Pyridine 235.5 parts 2.981 mol | Toluene 2000 parts | 5-15 | 90 | 50 | 1 |
| Example 13 | $\bar{M}$=625.4 1125.8 parts 1.80 mol | - | 149.2 parts 1.507 mol | Pyridine 265.1 parts 3.356 mol | Toluene 2200 parts | 5-15 | 90 | 50 | 1 |
| Example 14 | $\bar{M}$=349.1 69.8 parts 0.200 mol | - | 12.28 parts 0.124 mol | Tributyl-amine 50.58 parts 0.273 mol | Toluene 250 parts | -5-10 | 60 | 30 | 2 |
| Comparative Example 3 | $\bar{M}$=625.4 37.6 parts 0.060 mol | - | 4.06 parts 0.041 mol | Pyridine 7.54 parts 0.095 mol | Toluene 100 parts | 0-10 | 30 | 50 | 1 |
| Example 15 | $\bar{M}$=625.4 37.6 parts 0.060 mol | Pyridine 0.1 part | TCF 3.98 parts 0.020 mol | Pyridine 7.54 parts 0.095 mol | Toluene 100 parts | 5-10 | 30 | 35 | 3 |
| Example 16 | $\bar{M}$=625.4 37.6 parts 0.060 mol | Tri-ethyl-amine 0.05part | TCF 5.10parts 0.0258mol | Pyridine 8.72 parts 0.110 mol | Toluene 100 parts | 5-10 | 40 | 50 | 1 |
| Example 17 | $\bar{M}$=625.4 37.6 parts 0.060 mol | Tetra-methyl-urea 0.09part | TCF 4.41parts 0.0223mol | Pyridine 7.85 parts 0.099 mol | Toluene 100 parts | 5-10 | 25 | 50 | 1 |

Table 3 (continued)

| Example | Results | | | | | | GPC analysis | |
|---|---|---|---|---|---|---|---|---|
| | Obtained amount (parts) | OH value KOH mg/g | $\bar{M}$ | TM °C | Td °C | η (cps/25) | $\bar{M}n$ | Unreacted PTMEG peak |
| Example 11 | 38.2 | 24.9 | 4506 | 9.2 | 245-403 | 105000 | 4805 | Nil |
| Example 12 | 1258.8 | 52.0 | 2158 | 9.8 | 246-402 | 3500 | 2194 | Nil |
| Example 13 | 1167.0 | 29.2 | 3842 | 9.3 | 242-401 | 36000 | 4304 | Nil |
| Example 14 | 71.5 | 116.1 | 966 | -8.5 | 238-385 | 650 | 1050 | Nil |
| Comparative Example 3 | 37.8 | 47.5 | 2362 | 9.2 | 245-398 | 3405 | 2415 | Present |
| Example 15 | 37.9 | 53.6 | 2093 | 9.2 | 240-403 | 3302 | 2662 | Nil |
| Example 16 | 38.2 | 21.7 | 5170 | 9.2 | 246-405 | 201000 | 4302 | Nil |
| Example 17 | 38.0 | 42.0 | 2671 | 9.5 | 243-401 | 83210 | 3002 | Nil |

*$\bar{M}$: Average molecular weight calculated from the OH value
TM: Melting point, Td: Heat decomposition temperature (in air),
η: Viscosity (cps. at 25°C),
$\bar{M}n$: Average molecular weight as calculated from GPC as the standard polyethylene

Table 4

| Example | Charge | | | | | Reaction conditions | | | |
|---|---|---|---|---|---|---|---|---|---|
| | | | | | | Dropwise addition | | Post Reaction | |
| | PTMEG | Addition | Phosgene | Base | Solvent | Temp. (°C) | Time (min) | Temp. (°C) | Time (H) |
| Comparative Example 4 | $\bar{M}$=625.4 37.6 parts 0.060 mol | Pyridine 0.10 | TCF 4.07parts 0.0206mol | Pyridine 7.54 parts 0.095 mol | Toluene 100 parts | 5-10 | 20 | 50 | 1 |
| Comparative Example 5 | $\bar{M}$=625.4 37.6 parts 0.060 mol | - | TCF 3.98 parts 0.020 mol | Pyridine 7.54 parts 0.095 mol | Toluene 100 parts | 5-10 | 30 | 35 | 3 |
| Comparative Example 6 | PTG 4000 | - | - | - | - | - | - | - | - |
| Comparative Example 7 | PTG 2000 | - | - | - | - | - | - | - | - |

Table 4 (continued)

| Example | Results | | | | | | GPC analysis | |
|---|---|---|---|---|---|---|---|---|
| | Obtained amount (parts) | OH value KOH mg/g | $\bar{M}$ | TM °C | Td °C | η (cps/25) | $\bar{M}n$ | Unreacted PTMEG peak |
| Comparative Example 4 | 37.9 | 48.8 | 2299 | 9.7 | 243-403 | 3390 | 2600 | Present |
| Comparative Example 5 | 34.5 | 51.0 | 2200 | 10.2 | 239-362 | 3200 | 2310 | Nil |
| Comparative Example 6 | - | 28.2 | 3979 | 28.5 | 246-312 | 12000 (at 40°C) | 4180 | - |
| Comparative Example 7 | - | 57.7 | 1945 | 22-25 | 245-313 | 960 (at 40°C) | 2152 | - |

*$\bar{M}$: Average molecular weight calculated from the OH value
TM: Melting point, Td: Heat decomposition temperature (in air),
η: Viscosity (cps. at 25°C),
$\bar{M}n$: Average molecular weight as calculated from GPC as the standard polyethylene

As is evident from the foregoing, the polyoxytetramethylene glycol of the present invention has improved heat resistance without impairing the excellent properties of PTMEG and has a low melting point

accomplished as compared with PTMEG having an equivalent molecular weight. Thus, the industrial value of the present invention is high, and the present invention is useful within a wide range as a soft segment component for polyurethane resins, polyester resins and polyamide resins. It is particularly useful for various fields of coating materials, coating agents, binders, adhesives, etc. where room temperature curing is required, to which polyurethane resins using PTMEG used to be hardly applicable.

## Claims

A modified polyoxytetramethylene glycol having a main chain with a repeating structure comprising a polyoxytetramethylene group of the formula $\{O(CH_2)_4\}_n$ wherein n is from 3 to 28, and a dioxycarbonyl group of the formula $-O\overset{\overset{O}{\|}}{C}O-$, wherein the oxytetramethylene group $-O(CH_2)_4$-constitutes from 75.5 to 99.3 mol% and the dioxycarbonyl group constitutes from 24.5 to 0.7 mol%.

2. The modified polyoxytetramethylene glycol according to Claim 1, which has a molecular weight of from 1,000 to 5,000.

3. The modified polyoxytetramethylene glycol according to Claim 1, wherein n is from 4 to 20.

4. A process for producing a modified polyoxytetramethylene glycol having a main chain with a repeating structure comprising a polyoxytetramethylene group of the formula $\{O(CH_2)_4\}_n$ wherein n is from 3 to 28, and a dioxycarbonyl group of the formula $-O\overset{\overset{O}{\|}}{C}O-$, wherein the oxytetramethylene group $-O(CH_2)_4$-constitutes from 75.5 to 99.3 mol% and the dioxycarbonyl group constitutes from 24.5 to 0.7 mol%, which comprises subjecting a polyoxytetramethylene glycol of the formula $H\{O(CH_2)_4\}_nOH$ wherein n is as defined above, to an ester exchange reaction with a carbonate of the formula

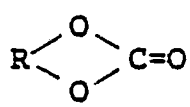

wherein R is a bivalent aliphatic saturated $C_2$-$C_6$ hydrocarbon group, or $R'O\overset{\overset{O}{\|}}{C}OR''$ wherein each of $R'$ and $R''$ which may be the same or different is a monovalent aliphatic $C_1$-$C_6$ hydrocarbon group or an aryl group, in a molar ratio of the polyoxytetramethylene glycol/the carbonate of from 0.1 to 1.0.

5. The process according to Claim 4, wherein the ester exchange reaction is conducted in the presence of from 0.001 to 0.5 mol%, based on the polyoxytetramethylene glycol, of an ester exchange catalyst.

6. A process for producing a modified polyoxytetramethylene glycol having a main chain with a repeating structure comprising a polyoxytetramethylene group of the formula $\{O(CH_2)_4\}_n$ wherein n is from 3 to 28, and a dioxycarbonyl group of the formula $-O\overset{\overset{O}{\|}}{C}O-$, wherein the oxytetramethylene group $-O(CH_2)_4$-constitutes from 75.5 to 99.3 mol% and the dioxycarbonyl group constitutes from 24.5 to 0.7 mol%, which comprises reacting a polyoxytetramethylene glycol of the formula $H\{O(CH_2)_4\}_nOH$ wherein n is as defined above, with phosgene in the presence of an inert solvent, wherein the polyoxytetramethylene glycol and phosgene are mixed in a molar ratio of from 1.08 to 2.0, and then an organic base is added to conduct the reaction.

7. A process for producing a modified polyoxytetramethylene glycol having a main chain with a repeating structure comprising a polyoxytetramethylene group of the formula $\{O(CH_2)_4\}_n$ wherein n is from 3 to 28, and a dioxycarbonyl group of the formula $-O\overset{\overset{O}{\|}}{C}O-$, wherein the oxytetramethylene group $-O(CH_2)_4$-constitutes from 75.5 to 99.3 mol% and the dioxycarbonyl group constitutes from 24.5 to 0.7 mol%, which comprises reacting a polyoxytetramethylene glycol of the formula $H\{O(CH_2)_4\}_nOH$ wherein n is as defined above, with trichloromethyl chloroformate in the presence of an inert solvent, wherein from 0.001 to 5.0% by weight, relative to trichloromethyl chloroformate, of pyridine, a pyridine derivative, quinoline, tetramethylurea, hexamethylphosphoric acid triamide and/or an amine of the formula $R_1R_2R_3N$ wherein $R_1$ is an alkyl group having from 1 to 12 carbon

atoms, and each of $R_2$ and $R_3$ is an alkyl group having from 1 to 4 carbon atoms, provided that $R_1$, $R_2$ and $R_3$ may be the same or different, is preliminarily added to polyoxytetramethylene glycol, then the polyoxytetramethylene glycol and trichloromethyl formate are mixed in a molar ratio of from 2.16 to 4.0, and then an organic base is added to conduct the reaction.

8. The process according to Claim 6 or 7, wherein the organic base is a pyridine, triethylamine, tri-n-propylamine or tri-n-butylamine.

9. The process according to Claim 8, wherein the pyridine is pyridine or a methyl-substituted pyridine having the methyl group at the 2-, 3-, 4-, 5- or 6-position.